# EUROPEAN PATENT APPLICATION

(11) **EP 4 848 096 A1**
(43) Date of publication of application: **02.12.2026**
(21) Application number: 26175552.4
(22) Date of filing: 29.04.2026
(51) Int. Cl.: G06F 12/0864, G06F 12/084, G06F 12/128, G06F 12/0811

(54) **WAY FILTERING IN A SHARED CACHE OF A PROCESSOR**

(30) Priority: 27.05.2025 US 202519219102
(71) Applicant: Google LLC, Mountain View, CA 94043 (US)
(72) Inventor: Sadayan Ebramsah Mo Abdul, Sadayan Ghows Ghani, Mountain View, 94043 (US); Ringe, Tushar, Mountain View, 94043 (US); Kou, Leigang, Mountain View, 94043 (US); Ganapathy, Krishnakumar, Mountain View, 94043 (US)
(74) Representative: Maikowski & Ninnemann Patentanwälte Partnerschaft mbB

(57) **Abstract**

Implementations described herein relate to way filtering in a shared cache of a processor. For example, a shared cache of a processor may provide, in response to a request from a core of the processor, a cache line to a local cache of the core. The shared cache may include a first way and a second way, and the cache line may be stored in an entry within the first way. The shared cache may provide, with the cache line provided to the local cache, a way indicator configured to preclude the entry for the cache line being stored in the second way, and this cache line and way indicator may be stored within the local cache. Based on the way indicator stored within the local cache, the shared cache may update the entry without accessing the second way. Corresponding methods, processors, and other implementations are also disclosed.

## Description

### BACKGROUND

Computer processors use small and fast memory resources, referred to as caches, to store copies of frequently accessed data. Caches may allow the processor to retrieve instructions and other data more quickly than if they had to fetch the information from slower main memory. Because a cache will be significantly smaller than the memory space it represents, multiple addresses within the full memory space (referred to as physical addresses) will map to the same index in the cache (referred to as a set index). Thus, for example, in a direct-mapped cache, two frequently-accessed blocks of data from memory (referred to as cache lines) could happen to map to the same set index, and could constantly evict each other from the cache, leading to poor performance.

### SUMMARY

A multi-core processor may employ multiple levels of data caching including, for example, respective local caches (e.g., L1 caches) that are used individually by each of the cores of the processor, and a shared cache (e.g., an L2 cache) that is used by all the cores. In an inclusive caching scheme, the shared cache maintains a copy of all the data in all the local caches and facilitates coordination between the local caches such as by providing data to the local caches, managing data within the local caches (e.g., reconciling data changed by one local cache before supplying it to another), receiving updates from the local caches as they change or evict the data they are working with, and so forth. Significant power may be consumed when a local cache updates a cache line, and this update is implemented in the shared cache. This is because all the ways of the shared cache may be analyzed in parallel to locate the entry where the cache line is stored. Methods and systems described herein for way filtering in a shared cache may be configured to help reduce this power consumption by providing a way indicator to be stored by the local cache along with the cache line, and by the local cache then providing this way indicator back to the shared cache with the cache line when the update is requested. Based on the way indicator, the shared cache may filter at least one way that does not store the cache line being updated, thereby conserving power as at least that way remains powered down while one or more other ways are accessed.

In some aspects, the techniques described herein relate to a method including: providing, by a shared cache of a processor in response to a request from a core of the processor, a cache line to a local cache of the core, wherein the shared cache includes a first way and a second way, and the cache line is stored in an entry within the first way; providing, with the cache line provided to the local cache, a way indicator configured to preclude the entry for the cache line being stored in the second way; storing, within the local cache, the cache line and the way indicator; and based on the way indicator stored within the local cache, updating the entry without accessing the second way.

In some aspects, the techniques described herein relate to a processor including: a core; a local cache of the core, the local cache configured to store a cache line and a way indicator; and a shared cache including a first way and a second way, the cache line being stored in an entry within the first way, and the shared cache being configured to: provide, in response to a request from the core, the cache line to the local cache, provide, with the cache line provided to the local cache, the way indicator to be stored in the local cache, the way indicator being configured to indicate that the entry for the cache line is not stored in the second way, and based on the way indicator stored within the local cache, update the entry without accessing the second way.

In some aspects, the techniques described herein relate to a shared cache of a processor, the shared cache including: a first way including an entry storing a cache line; a second way; and a cache controller configured to: provide, in response to a request from a core of the processor, the cache line to a local cache of the core, the local cache being configured to store the cache line and a way indicator, provide, with the cache line provided to the local cache, the way indicator to be stored in the local cache, the way indicator being configured to indicate that the entry for the cache line is not stored in the second way, and based on the way indicator stored within the local cache, update the entry without accessing the second way.

Other implementations may perform similar functions as described above and/or may use other types of hardware to perform the functions. Certain implementations may involve systems, devices, media, and/or combinations of these, that employ processors such as described herein (e.g., with cores, caches, and/or buses configured to employ way filtering in shared caches of the processors as described herein).

The details of these and other implementations are set forth in the accompanying drawings and the description below. Other features will also be made apparent from the following description, drawings, and claims.

### BRIEF DESCRIPTION OF THE DRAWINGS

FIG. 1 shows an illustrative implementation of way filtering in a shared cache of a processor in accordance with principles described herein.
FIGS. 2A-2B show illustrative methods for implementing way filtering in a shared cache of a processor in accordance with principles described herein.
FIG. 3 shows illustrative aspects of an example processor that is configured to implement way filtering in a shared cache in accordance with principles described herein.
FIG. 4 shows illustrative aspects of a local cache of a core of a processor in accordance with principles described herein.
FIG. 5A shows illustrative aspects of a shared cache of a processor when providing a cache line to a local cache in accordance with principles described herein.
FIG. 5B shows illustrative aspects of a shared cache of a processor when updating a cache line from a local cache in accordance with principles described herein.
FIGS. 6A-6D show illustrative way indicators that may be coupled with a cache line and used to perform way filtering in a shared cache in accordance with principles described herein.
FIG. 7 shows an illustrative computing device that may use or implement one or more processors such as those described herein.

### DETAILED DESCRIPTION

A multi-way, set-associative cache provides the advantage (as compared to a direct-mapped cache) of including multiple locations in which to cache blocks of data (referred to as cache lines) that may happen to map to the same set index within the cache. For example, if a shared cache (e.g., an L2 cache) is 16-way set-associative, up to 16 entries could be cached for each set index before eviction would become necessary. A challenge with such a cache, however, is that any cache line mapping to a particular set index may need to be compared against (in this example) 16 different entries to determine where the cache line is stored, an operation that may consume considerable power (if performed in parallel) and/or time (if performed in series). Methods and systems for way filtering in a shared cache are therefore described herein to help overcome this challenge and utilize resources more efficiently. Specifically, as detailed herein, a shared cache (e.g., an L2 cache) providing a cache line to a local cache of a core (e.g., an L1 cache) may provide, with the cache line, full or partial information to indicate the way index in which the cache line is stored in the shared cache. This way indicator may be stored by the local cache so that, when it comes time for the local cache to send the cache line back (e.g., to update the cache line in the shared cache), the way indicator may be used to filter one or more ways that are known to not host the cache line. These filtered ways may be left powered down as one or more other ways are accessed for the update, thereby saving power and/or time and increasing processor performance.

A processor may include a plurality of cores (also referred to herein as processor cores) that operate in parallel and intercommunicate with one another to reconcile actions that each may be taking that could affect operations being performed by the others. For example, each core may access shared resources such as main memory (e.g., a bank of dynamic random-access memory), auxiliary processing resources (e.g., a graphics processing unit), peripheral input/output devices (e.g., a hard drive controller, a universal serial bus (USB) controller, etc.), and so forth, and the cores may intercommunicate to coordinate their use of these resources. In this way, the cores can avoid conflicts such as, for instance, two cores writing different values to the same memory address at the same time, one core reading a stale version of data that another core has locally modified, or the like.

As mentioned above, different levels of caches may help processor cores manage this inter-coordination and may also significantly improve performance by storing frequently-accessed data where it can be quickly read from and written to. For example, each core may maintain its own local cache (e.g., an L1 cache) in which its own frequently-accessed data can be staged and stored for access that is much quicker than would be possible if the data had to be fetched from main memory. A shared cache configured to be accessible to all the cores (e.g., an L2 cache) may then be used to coordinate data being managed by all the local caches of the various cores. In this role, the shared cache may accept requests from the cores to access certain chunks of data (referred to as cache lines) from main memory or other external sources (e.g., memory-mapped devices, etc.). For example, a core may request access to a particular cache line in furtherance of a load instruction (read transaction), a store instruction (write transaction), or another suitable memory-related instruction. Based on these requests, the shared cache may check to see if it is already caching the requested cache line (a cache hit) and, if it is not (a cache miss), the shared cache may retrieve the requested cache line.

Ultimately, the shared cache may be responsible for delivering the requested cache line to the core and, in certain implementations, for managing its own copy of the data that can be updated as appropriate when the requesting core makes changes to the data. As used herein, a shared cache may be referred to as an inclusive shared cache (or may be referred to as being inclusive of the local caches) when the shared cache maintains its own copy of all the cache lines (e.g., requested data) that are accessed by all the local cores. In this way, the shared cache may not only help initially procure requested data for the cores but may also help coordinate between the cores as they may each process their own copies of the same cache lines and use the data in ways that need to be coordinated and/or reconciled to maintain the integrity of the data. For example, if a first core requests a particular cache line and a second core later requests that same cache line, the shared cache may determine that it has a copy of the cache line that it can quickly give to the second core for the later request (avoiding needing to retrieve the data from memory), but it also recognizes, in this example, that the first core could have changed the cache line or may soon do so. Accordingly, the shared cache may coordinate to get the latest copy of the data from the first core and provide that to the second core, along with determining which of the cores has the right to modify the data and so forth.

By design, caches will have significantly less capacity than the memory space they map onto. Indeed, that smaller size is part of what allows a cache to operate closer to the core or cores it serves and to perform its role so quickly. If the entire memory space of main memory and any memory-mapped devices or other external data sources accessible via the memory system is represented by a range of physical addresses, a cache may be organized with a number of sets that directly map onto that address range (e.g., using certain bits from the physical address). For example, if an address space for a memory system had a million physical addresses numbered (in decimal notation, as indicated by a 'd' before each number) from 0 to d999,999, a cache with 100 sets could map onto that address space by using two digits of the address, such as the tens and the hundreds digits. In this example, then, set 0 of the cache would map to ten thousand physical addresses including 0-d9, d1000-d1009, d2000-d2009, etc.; set 1 of the cache would map to a different ten thousand physical addresses including d10-d19, d1010-d1019, d2010-d2019, etc.; set 2 of the cache would map to a different ten thousand physical addresses including d20-d29, d1020-d1029, d2020-d2029, etc.; and so forth up to a set 99 of the cache that would map to the final ten thousand physical addresses including d990-d999, d1990-d1999, d2990-d2999, and so forth.

If a cache line associated with one of these addresses is referred to by a physical address, the indexing scheme of this example makes it readily clear which set of the cache the physical address will map to (i.e., where the cache line with that physical address is to be stored within the cache). For instance, referring to the 100-set cache example above, the tens and hundreds place makes clear that physical address d123,456 will map to set 45, that physical address d654,321 will map to set 32, and so forth. A direct-mapped cache refers to a cache that is organized in this way, with a plurality of sets to which physical addresses directly map based on a property of the addresses themselves (e.g., the tens and hundreds digits of the address in this example) and where each set is associated with a single entry.

Direct-mapped caches have certain advantages since they can be accessed quickly and with minimal power with any physical address, since every physical address directly maps to exactly one entry. A technical problem arises, however, with direct-mapped caches when two addresses that happen to map to the same set are both frequently used. For instance, in the 100-set cache example above, two physical addresses in completely unrelated parts of the memory space could happen to map to the same set of the cache (e.g., d123,456 and d888,458 would both map to set 45 in one example). If cache lines associated with both of these addresses happen to be frequently accessed, performance of the cache will be suboptimal since every time the first cache line (e.g., with address d123,456) is brought into the cache it will cause the second cache line (e.g., with address d888,458) to be evicted (i.e., removed, kicked out, etc.) from set 45 of the cache, and when the second cache line is accessed again, it will cause the first cache line to get evicted. Even though both of these cache lines are frequently used, the conflict between them (i.e., that they both happen to map to the same set 45) causes them to constantly be evicted such that they have to again be retrieved from memory (which is slow and hurts performance).

One way to address this technical problem is to make a cache multi-way set-associative. Multi-way, set-associative caches address technical problem described above by including storage space for a plurality of different entries at each set index so that multiple physical addresses that map to the same set index may coexist within that set (rather than evicting one another as in the direct-mapped example above). These different storage spaces are referred to as "ways" and are configured to allow multiple cache lines that map to a same set index to occupy different ways at that index. While the set index for a particular cache line may be determined directly from the physical address of the cache line (e.g., certain bits of the physical address constituting the set index), the way index used within the particular set to store the cache line is not so readily determinable, as it may be selected randomly and/or based on other factors that do not derive directly from the physical address (e.g., whichever way is the least recently used, etc.).

To apply this to the running 100-set cache example laid out above, the cache could be made to be multi-way set-associative by including the same number of sets that the addresses directly map to (e.g., one hundred in this example) and by further including, for each set, storage space for more than one entry. As mentioned above, these ways (i.e., multiple entries associated with the same set) will be understood to not be mapped directly to the physical addresses (since, otherwise, the same problem described above with the direct-mapped caches would persist). If a multi-way set-associative cache replaced the direct-mapped cache above, the technical problem relating to the conflicting physical addresses could be mitigated, since one way of set d45 could be used to store an entry for the cache line with address d123,456 and another way of set d45 could be used to store an entry for the cache line with the address d888,458.

There are certain advantages of adding memory resources to a cache in the form of multiple ways, rather than by adding more sets (since adding more ways or more sets involves provisioning more cache entries that each use more memory resources). For example, it can be an advantage that physical addresses do not directly map to any particular way within the set, since otherwise the same technical problem faced with the sets would occur again. To illustrate, if a cache line with address d123,456 is stored in a first way of set 45 in the running example, another way of set 45 can be used to store any of the other 9,999 possible physical addresses that map to set 45, regardless of what any other bit of their address may be (i.e., all of the addresses dXXX,45X may map to set 45 and can be stored in a second way, where X is any digit 0-9). Multiple ways in a set-associative cache may therefore give the cache significantly more flexibility for accommodating the many physical addresses supported by the cache and may thereby help alleviate collisions and conflicts in the cache.

An additional technical problem arises, however, for multi-way caches such as described above, as these may require more work and analysis to look up a particular physical address. For example, if the 2-way, 100-set cache of the running example described above receives physical address d123,456 and needs to determine if a cache line for that address is present in the cache (e.g., so that the entry can be updated if there is a hit, so that the cache line can be retrieved if there is a miss, etc.), the address only indicates that the cache line will be found in one of the ways of set 45, and does not indicate which way (if any) will be used. For example, if and when the address in question was cached, the set index (e.g., set 45 in this example) would have been directly derived from the physical address, while the way index (e.g., 0 or 1 in a 2-way cache example) may have been selected randomly or by some other algorithm (e.g., a least recently used algorithm, etc.) that does not derive the index directly from the physical address. Accordingly, the conventional way of determining whether the address hits in the cache would be to access both ways from set 45 and check tags stored in the entry to determine if there is a hit. For example, physical address d123,456 may store a tag of d123 while physical address d888,458 may store a tag of d888 and other addresses may store other tags. Thus, when all the ways are accessed for a certain set, the tags may all need to be compared to the relevant tag (e.g., d123 in this example) to determine if there is a hit in the cache.

This conventional manner of managing ways presents a new technical problem relating to inefficient resource usage. While the gravity of the problem may seem minimal for the relatively simple 2-way example mentioned above, the problem could scale significantly for a more complex cache with more ways. For instance, if a cache included sixteen ways per set, such that all sixteen entries have to be checked to determine if there is a hit when any address maps to that set, it is clear that significant inefficiency may result from accessing and checking all the tags in parallel (e.g., using sixteen times as much power as would be required to only access and check one tag from one way), checking tags one at a time (e.g., taking up to 16 clock cycles if the tag is not found in any of the ways), or some combination of these.

This technical problem is inherent to multi-way set associative caches, despite the beneficial technical effects that these caches provide (e.g., the reduced cache collisions and resultant increase in cache and processor performance described above). In particular, as described above, an inclusive shared cache that is configured to store all the data for a plurality of local caches of a plurality of cores (e.g., 4, 8, 12, 16, 32, or another suitable number of cores that each have their own local caches) may be large and complex (e.g., having a relatively large number of sets and ways). Moreover, as further described above, the shared cache may be responsible for constantly updating cache lines based on requests from any of the cores. For instance, such updates to cache lines that the shared cache is storing may be performed whenever these cache lines are evicted (e.g., given up by the local cache due to needing space for other data), snooped (e.g., read out from one core so that another core can access the cache line), or otherwise have their states altered by the cores using the data.

One possible technical solution to the technical problem of excessive resource usage in accessing multi-way set-associative caches may be to provide a way predictor module between the cores (and their local caches) and the shared cache (e.g., L2 cache) as the cores send update requests for various cache lines to the shared cache during operation. Such a predictor could be configured to try to predict which way has the cache line based on, for instance, a hash table that covers every set of the tag table and has to be looked up serially, prior to looking up the tag. Such a solution would, however, add undesirable latency to the shared cache lookup since the way predictor would have to provide a way that would then have to be used to look up the tag. The way predictor itself would also consume additional power, thereby reducing some of the benefits it would purport to provide.

Accordingly, instead of a way prediction module, methods and systems described herein provide at least one technical solution to the technical problem outlined above that involves way filtering in the shared cache. More particularly, as will be described in detail with respect to the figures, this technical solution involves the shared cache providing a way indicator (e.g., one or more bits of data indicative of the ways that store or do not store an entry used for a particular physical address) to the local caches when cache lines are initially supplied. The local caches may then store that way indicator (e.g., often in extra or leftover bits within the caches that may not otherwise be put to any useful purpose), and the local caches provide the stored way indicator again when the shared cache's version of the cache line is to be accessed and updated. In other words, rather than the shared cache trying to keep track of which way it uses for every different cache line, the shared cache provides one or more bits to the local cache to later remind itself of which way it used for that particular cache line. When the local cache provides those bits (i.e., the way indicator) when it comes time for the cache line to be accessed (e.g., for processing of the cache line by one of the cores of the processor and/or for updating of the associated entry), the shared cache can use those bits to perform way filtering and not waste power (or time) checking ways that the bits indicate can be safely filtered from the search.

Accordingly, one beneficial technical effect of this technical solution is that power and/or time may be conserved for every shared cache access in which at least one way is filtered from needing to be checked. For instance, in the 16-way cache example mentioned above, a four-bit way indicator could be used to identify exactly which of the 16 ways is used to store the cache line and approximately one-sixteenth of the power may be used to access the cache line in the designated way (while the other 15 ways can be left powered down). Another beneficial technical effect of this approach is that there is flexibility in how a way indicator may be implemented, depending on what resources are available in a given implementation (e.g., how many extra bits may be available per entry in the local caches, etc.). For example, by using only one bit, half of the total number of ways may be filtered (e.g., eight of the sixteen ways in the example mentioned above). By using two bits, another half of those may be filtered (e.g., four of the eight unfiltered ways, such that now twelve of the sixteen ways may be filtered and only four checked), and so forth. Yet another beneficial technical effect of methods and systems described herein for way filtering in a shared cache is that the cost of implementing the way indicator may be minimal, particularly if one or more bits in the local cache are available to store this type of metadata that would otherwise not be used (or not used for something as beneficial as the way filtering scheme). For example, extra bits that might otherwise go unused may be employed to store at least partial way filtering information that can facilitate significant power and/or latency savings as has been described.

Various implementations will now be described in more detail with reference to the figures. It will be understood that particular implementations described below are provided as non-limiting examples and may be applied in various situations. Additionally, it will be understood that other implementations not explicitly described herein may also fall within the scope of the claims set forth below. Way filtering in a shared cache of a processor in accordance with principles described herein may result in any or all of the technical effects mentioned above, as well as various additional and/or alternative beneficial technical effects described and/or made apparent below.

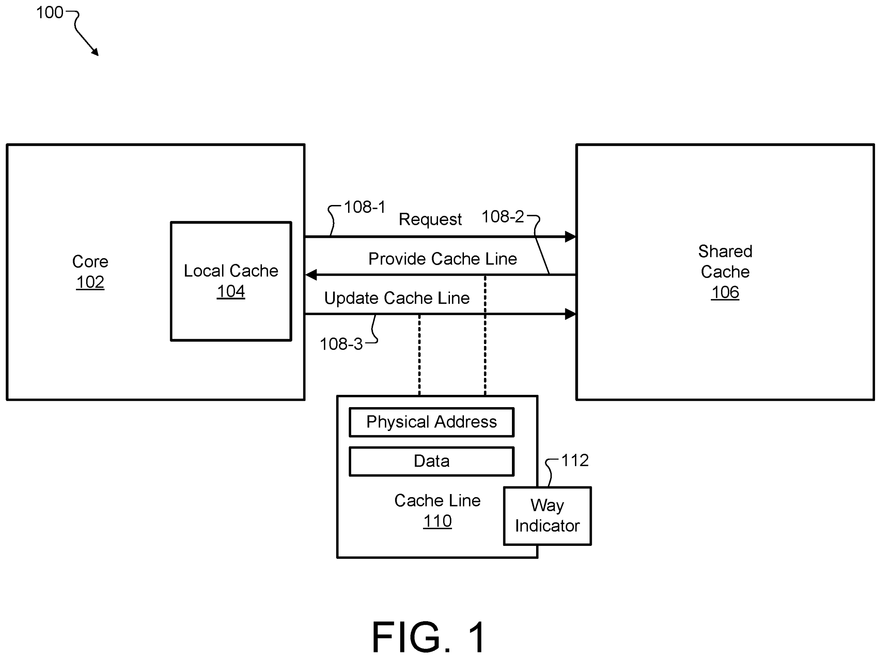

FIG. 1 shows an illustrative implementation 100 of way filtering in a shared cache of a processor in accordance with principles described herein. As shown, implementation 100 includes certain elements of a processor such as a central processing unit (CPU). First, implementation 100 shows a core 102 (also referred to as a processor core) that includes a local cache 104. As will be further described and illustrated below, core 102 may be one of several cores included within a processor and each of these may include their own local cache similar to the local cache 104 shown to be included within the core 102 of FIG. 1. For example, an execution unit of core 102 (not explicitly shown) may include circuitry implementing one or more functional units within core 102 that execute software instructions using data that is locally cached (e.g., staged for quick loading, stored temporarily before being written back to main memory, etc.) in local cache 104. One such execution unit, for instance, could be a load/store unit (LSU) of the core, which may be responsible for retrieving instructions and data from memory, storing data to memory, reading and writing registers of memory-mapped devices, and so forth. It will be understood that a processor core may include an LSU and various other execution units for executing different types of instructions, as well as various other facilities for preprocessing and/or postprocessing the instructions in various ways. A simplified view of core 102 is shown in this and other examples herein to focus on certain aspects of way filtering in a shared cache of a processor using principles described herein.

A shared cache 106 is shown to be communicatively coupled to core 102 within implementation 100. For example, if local cache 104 of core 102 is implemented as one L1 cache of a plurality of L1 caches hosted by a plurality of cores (not shown in FIG. 1), shared cache 106 may implement an L2 cache to which all these cores (and therefore all these L1 caches) share access. As mentioned above, for example, shared cache 106 may be configured to be an inclusive shared cache that not only stores and keeps track of all the data that is provided to local cache 104 for processing by core 102, but also all the data that is provided to other local caches for processing by their own respective cores (not shown). As a result, shared cache 106 may be significantly larger (in terms of memory capacity) and more complex than the local caches so that it can manage all their data and perform other roles such as directly communicating with a memory controller for the main memory and/or memory-mapped devices.

As mentioned, to serve as an inclusive cache that facilitates coordination between local cache 104 and at least one other local cache (not shown in FIG. 1), shared cache 106 may be configured to perform several responsibilities. First, when a local cache 104 misses on a particular cache line that core 102 seeks to access, core 102 may request that shared cache 106 obtain the data and provide it to local cache 104 so that it can be accessed. A first communication 108-1 in FIG. 1 illustrates such a request ("Request") that core 102 may make on behalf of local cache 104. For instance, after determining that the cache line is not yet stored by local cache 104, communication 108-1 may represent a message sent by core 102 to indicate to shared cache 106 that a cache line for a particular physical address has been requested. Upon receiving the request, shared cache 106 may determine if the requested cache line is available from its own memory stores (a cache hit in shared cache 106) or if it will need to be retrieved from elsewhere (a cache miss in shared cache 106).

In either case, a communication 108-2 shows how shared cache 106 may respond to the request once the requested cache line has been obtained. As shown, communication 108-2 may involve sending the requested data ("Provide Cache Line") from shared cache 106 to core 102 and local cache 104. A dotted line from communication 108-2 shows an example of certain data that may be transmitted as part of communication 108-2. For example, the cache line 110 that is transmitted to core 102 may indicate its own address ("Physical Address") and the data associated with that address ("Data"), such as the data stored at that physical address in main memory or data provided by a device register to which that physical address maps.

Along with the standard elements of cache line 110 (which will be understood to also include, in certain cases, additional data, metadata, etc., that is not shown in this example and is outside the scope of the present discussion), FIG. 1 shows that a way indicator 112 may also be provided with cache line 110 when it is provided by shared cache 106 as part of communication 108-2. As mentioned above, and as will be further described below, a way indicator such as indicator 112 may include one or more bits that facilitate way filtering by indicating a way of shared cache 106 in which cache line 110 stored, or at least indicating a subset of an overall set of ways that might store the cache line (and thus should not be filtered when the cache line is again accessed). Accordingly, another way of looking at way indicator 112 is that way indicator 112 indicates at least one way that is not being used to store cache line 110. In other words, way indicator 112 may be configured to preclude the possibility that the entry for cache line 110 is stored by one or more ways, which can then be filtered (e.g., left powered down, etc.) when the ways are checked to determine where cache line 110 is stored within shared cache 106.

For communication 108-2, shared cache 106 is providing (e.g., supplying, transmitting, etc.) the cache line (which, since shared cache 106 is inclusive, will be stored not only in local cache 104 but also maintained in shared cache 106). Way indicator 112 is then stored with the other elements of cache line 110 in local cache 104 until core 102 has cause to send it back as part of a communication 108-3 ("Update Cache Line"). The communication 108-3 to update the cache line may be initiated by core 102 (e.g., local cache 104) or by shared cache 106 (e.g., by way of another communication not explicitly shown in FIG. 1). For instance, sometime after communication 108-2, local cache 104 may need the storage space previously occupied by cache line 110 for another more relevant cache line. In this case, cache line 110 would be evicted from local cache 104 and provided back to shared cache 106, which may at least annotate its copy of the data (e.g., to track that local cache 104 is no longer storing the line), if not determine that the data can also be evicted from shared cache 106. As another example, shared cache 106 may trigger communication 108-3 by snooping local cache 104 for cache line 110 (by way of another communication not shown). For instance, if another core requests access to cache line 110, shared cache 106 may be configured to take it away from core 102 or at least be sure that the latest version of the data (with any changes that core 102 may have made to the data) is provided to the other core. This may include asking local cache 104 for the latest version of the data it has (also referred to as snooping the local cache for the particular cache line), and updating the copy of the data maintained by shared cache 106 before supplying the cache line to any other entity (e.g., the other core, writing it back to memory, etc.).

Communication 108-3 thus may represent the response of core 102 to a snoop request, the result of a cache line being evicted from local cache 104, or another suitable update that core 102 requests that shared cache 106 make to its version of cache line 110. In any of these situations, the dotted line from communication 108-3 to cache line 110 shows that, like communication 108-2, communication 108-3 may include the transmission of not only the typical elements of cache line 110 but also the way indicator 112 (which may have been stored along with cache line 110 in local cache 104 since it was earlier provided in communication 108-2). In this way, even though shared cache 106 may not know exactly where it stored cache line 110, the set will be derivable from the physical address and the way will be at least partially indicated by way indicator 112 so that power may be conserved as shared cache 106 searches for the cache line within the indicated set.

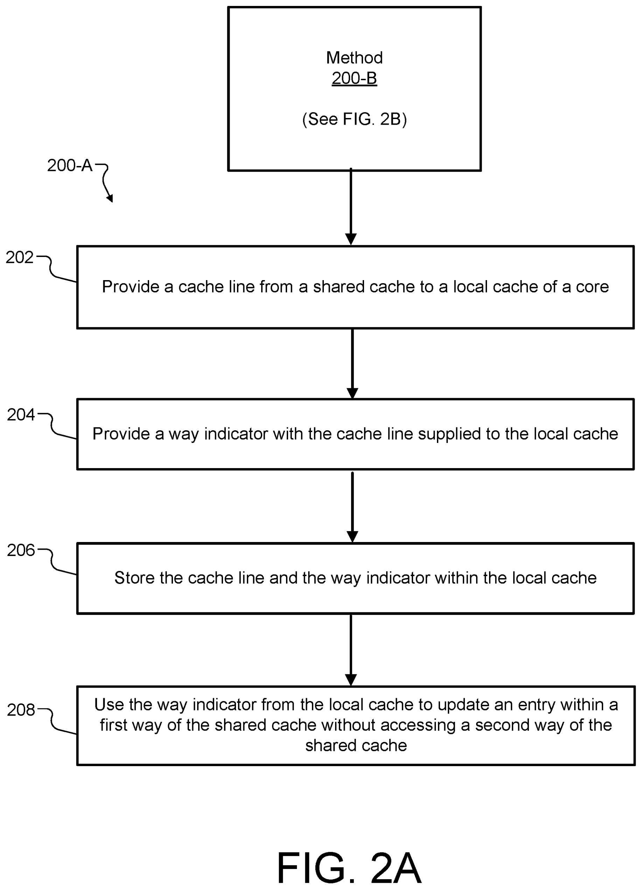

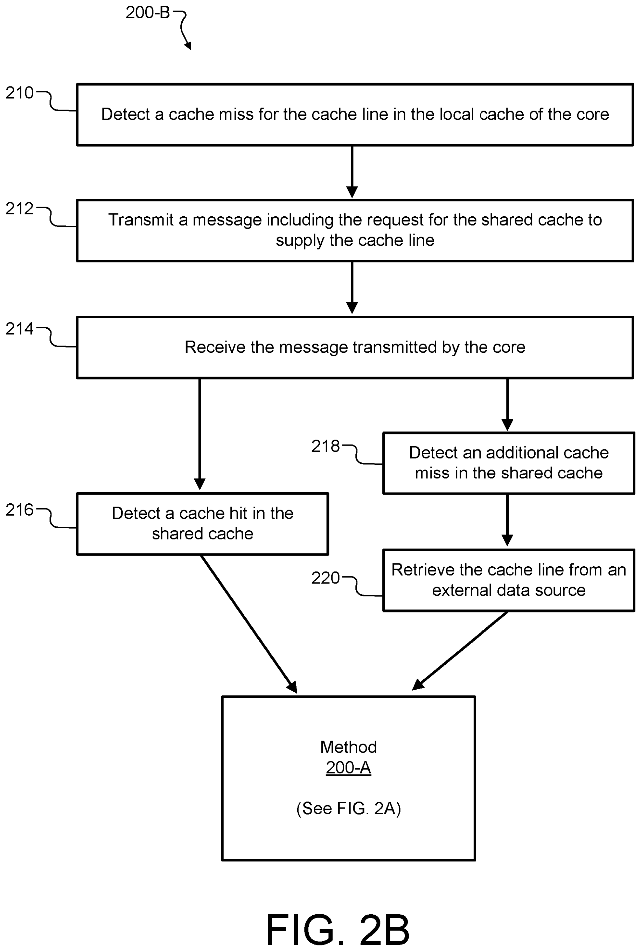

FIGS. 2A-2B show illustrative methods for implementing way filtering in a shared cache of a processor in accordance with principles described herein. More particularly, FIG. 2A shows an illustrative method 200-A that mirrors the operations described above in relation to implementation 100 (e.g., communications 108-1 through 108-3, etc.), while FIG. 2B shows an illustrative method 200-B that includes certain operations that may be performed prior to method 200-A to help prepare for the way filtering included within method 200-A.

The operations of both methods 200-A and 200-B may be performed by elements of a processor such as a CPU (e.g., any of the processors and elements described herein). For example as will be further described below, certain operations may be performed by a shared cache such as shared cache 106, while other operations may be performed by a core of the processor (e.g., core 102) and/or a local cache within that core (e.g., local cache 104). While FIGS. 2A-2B show illustrative operations according to a specific implementation, it will be understood that other implementations of these methods may omit, add to, reorder, and/or modify any operations that are explicitly represented in FIGS. 2A-2B. Additionally, while these operations are illustrated with arrows suggestive of a sequential order of operation, it will be understood that one or more of the operations may be performed concurrently (e.g., in parallel) with one another. Each of the operations of methods 200-A and 200-B will now be described in more detail.

At operation 202, a shared cache of a processor may provide (e.g., supply, transmit, etc.) a cache line to a local cache of a core of the processor. For example, as described above in relation to first communications 108-1 and 108-2, a core such as core 102 may send a request for a particular cache line such as cache line 110, and the providing of the cache line by the shared cache (i.e., at operation 202 and as illustrated by communication 108-2) may be performed in response to the request. The shared cache may be implemented as a multi-way, set-associated cache, or, in other words, the shared cache may include at least a first way and a second way so that at least two entries may be simultaneously stored (without one necessarily requiring eviction of the other) for sets of addresses that happen to map to each set index. While the cache line may map to a specific set, then, it will be understood that the cache line may be stored in any of the ways (e.g., either the first or the second way) as may be determined based on factors other than the physical address associated with the cache line. For instance, it will be assumed for purposes of this example that the cache line is stored in an entry within the first way of the shared cache (rather than the second way or another way if there are more than two). This first way may have been selected randomly, based on which way was available, based on which way was least recently used, or by some other suitable heuristic as may serve a particular implementation.

At operation 204, the shared cache may provide (e.g., include) a way indicator with the cache line being provided to the local cache. In other words, as illustrated by way indicator 112 and cache line 110 in implementation 100, operation 204 may be performed as part of operation 202. That is, when the cache line is being communicated (supplied) in a communication such as communication 108-2, part of the data transmitted from the shared cache to the core (to be stored in the local cache) may be the way indicator. The way indicator included at operation 204 may be configured to preclude the entry for the cache line being stored in the second way. In an example where there are only two ways, this preclusion would thus be equivalent to indicating that the entry for the cache line is stored in the first way. In other examples involving a larger number of ways, however, this preclusion may not necessarily positively indicate which way stores the cache line, though it still allows for at least the second way to be precluded from a search (thereby saving power and/or time for reasons described above).

To illustrate with a more numerical example, if the shared cache included eight ways with way indices (in binary, as indicated by a lowercase 'b' before each number) from b000-b111, the way indicator could be one bit that represents the most significant bit of the way in which the cache line is stored. If the first way (i.e., the way storing the cache line in question) happens to be way b011, for example, a way indicator of '0' would preclude the entry being stored in the four ways beginning with '1' (i.e., ways b100 to b111) while allowing the entry to be stored in any of the four ways beginning with '0' (i.e., ways b000 to b011). While this one-bit way indicator would not expressly indicate where the entry for the cache line is stored (and thus all four ways b000 to b011 would need to be accessed and searched, in this example, to determine that the entry is stored in b011), the one-bit way indicator does efficiently preclude the entry for the cache line being stored in half of the ways, which do not need to be powered up (or fully powered up) during the search. This filtering of the ways from b100 to b111 may allow power to be saved, as has been described. Additionally, as will be further detailed below, it will be understood that additional bits could be added to the way indicator to help further preclude and filter ways (albeit with diminishing returns for each bit) until a three-bit way indicator (indicating exactly one way of the eight in this example) would preclude all the ways other than the first way that actually stores the entry for the cache line (i.e., b011 in the example above).

At operation 206, the processor may store, within the local cache, the cache line and the way indicator. For example, while the shared cache may keep no record of which way it used to store the cache line when it was provided to the local cache at operation 202, the way indicator may be stored together with the rest of the cache line data (e.g., within extra bits that may be available in the local cache, as will be described in more detail below) for later use when the core is to return the cache line to the shared cache (e.g., which could be many clock cycles and operations later after many other operations are performed).

At operation 208, the processor may update the entry within the stored cache without accessing the second way (i.e., while filtering the second way or leaving the second way powered down). For example, many clock cycles after operation 206 (in one example), the local cache may need the space previously used for the cache line to store a different cache line, and, as a result, may evict the cache line from that entry by sending it back to the shared cache. In some cases, this update may involve actually changing the version of the data that the shared cache has maintained (i.e., overwriting the data with the version of the cache line being evicted by the core). In other cases, this update may involve leaving the data the same, but altering one or more status bits (e.g., to record that the core is no longer caching this particular cache line). In either of these cases (or other suitable updates), the shared cache may access the cache line entry in which it had been stored. The set index may be readily determined based on the physical address of the cache line and the way may then be determined based on a search that filters at least one way based on the way indicator (i.e., which had been stored within the local cache at operation 206 and is now provided to the shared cache by the core). Since the way indicator is at least configured to preclude the entry for the cache line being stored in the second way, the second way may be filtered from this search, or, in other words, the updating of the entry at operation 208 may be performed without accessing the second way (and expending the corresponding power).

As shown in FIG. 2A, operations 202-208 may, in certain examples, be preceded by other operations of method 200-B, which are further described in relation to FIG. 2B. Indeed, FIG. 2B shows operations 210-220 of method 200-B, which ultimately flow to method 200-A.

At operation 210, the core of the processor may detect a cache miss for the cache line in the local cache of the core. For example, an instruction calling for a memory transaction (e.g., a load or a store) with respect to a physical address associated with the cache line may be executed by the core. As part of executing the instruction, the core may determine the physical address (e.g., using a translation cache such as a lookaside buffer separate from the local cache of this example) and provide the physical address to the local cache to see if the relevant cache line already happens to be cached. For the purposes of this example, the cache line is not already cached, thus leading to the detection of the cache miss of operation 210.

At operation 212, the core may transmit a message to the shared cache in response to the detecting of the cache miss at operation 210. For example, the message may include the request (mentioned above in relation to operation 202 and represented by first communication 108-1 in FIG. 1) for the shared cache to supply the cache line.

At operation 214, the shared cache may receive the message transmitted by the core at operation 212. Then, based on what data happens to be cached, two branches may be taken to ultimately arrive at operation 202 of method 200-A described above.

On a first branch, the shared cache may perform an operation 216 in which the shared cache detects a cache hit for the cache line in the shared cache. For example, the physical address may be used to identify a set in which the cache line could be stored, and then a full search of all the ways in that set (i.e., comparing tags of each of the entries with a tag of the physical address received at operation 214) could be performed to determine if the cache line happens to be present in the cache. In the case of this first branch (operation 216), there is a cache hit, and the cache line does happen to be present in the shared cache. Accordingly, the providing of the cache line at operation 202 (in method 200-A, which follows operation 216) may include transmitting the cache line from the shared cache (where it is stored in the identified way) based on the cache hit.

On a second branch, the shared cache may perform operation 218 and 220 before reaching operation 202 of method 200-A. For operation 218, the physical address received as part of the message in operation 214 would again be used to identify the set and the full search would again be used to search all the ways in that set. In this branch, however, an additional cache miss is detected for the cache line in the shared cache. In other words, just as the local cache did not happen to have the requested cache line, the shared cache too lacked this particular cache line. Accordingly, at operation 220, the shared cache may, based on the additional cache miss detected at operation 218, retrieve the cache line from a data source external to the processor. For example, the cache line could be retrieved from main memory or a memory-mapped device by way of a memory controller or the like that is configured to assist the shared cache with accessing data from such sources. In the case of this second branch (operations 218-220), there is a cache miss, and the cache line does not happen to be present in the shared cache. Accordingly, the providing of the cache line at operation 202 (in method 200-A, which follows operation 220) may include transmitting the cache line from the shared cache (where it will now be stored in the identified way) subsequent to retrieving (at operation 220) the cache line from the data source external to the processor.

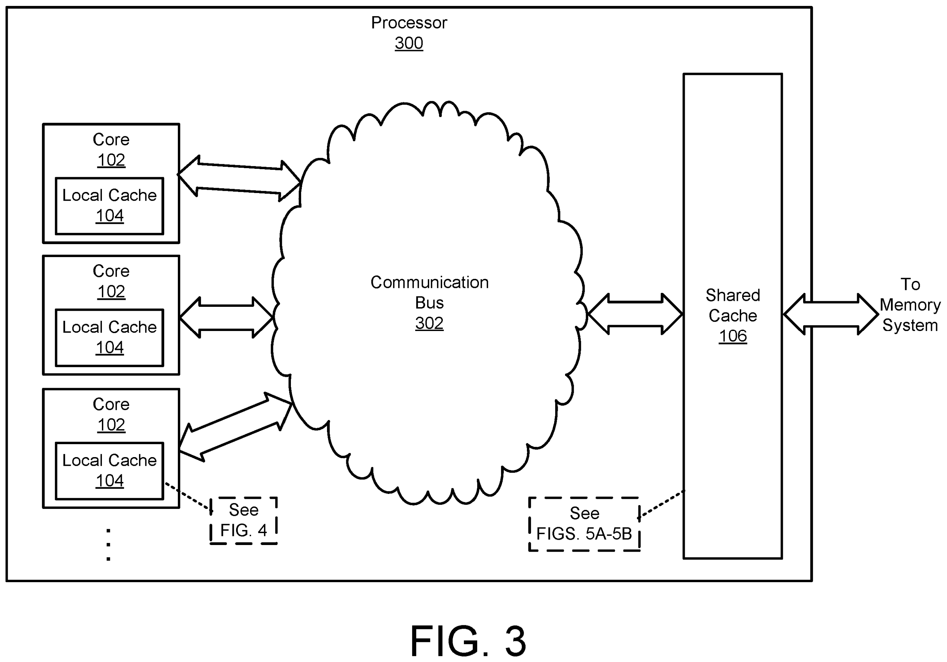

FIG. 3 shows illustrative aspects of an example processor 300 that is configured to implement way filtering in a shared cache of a processor in accordance with principles described herein. For example, processor 300 may be implemented as a multi-core central processing unit (CPU) or, in certain examples, another type of processor such as a graphics processing unit (GPU), a microprocessor, or the like. Processor 300 is shown to include a plurality of cores 102 (three cores explicitly drawn with potentially other cores represented in the figure by an ellipsis) each featuring their own respective local cache 104. For example, some example implementations could include two cores, four cores, eight cores, twelve cores, sixteen cores, thirty-two cores or any other number of cores as may serve a particular implementation.

Along with cores 102, processor 300 is also shown to include shared cache 106, which, as has been described, may be a multi-access cache configured to serve all the cores 102 (as opposed to the local caches 104 that each just serve one core), as well as a communication bus 302 communicatively coupling shared cache 106 to each of the cores 102. Shared cache 106 may represent a level-2 (L2) cache that is communicatively coupled to a memory controller (not shown in FIG. 3) and is configured to cache certain data (e.g., to temporarily stage frequently-accessed data for low-latency access by the cores on the data's way to or from a memory system including main memory and/or a variety of memory-mapped devices). In this way, shared cache 106 may perform or facilitate memory transactions (e.g., load transactions whereby data is obtained from memory or a device, store transactions whereby data is sent to memory or a device, etc.) requested by all of cores 102.

Communication bus 302 may be configured to carry data transmissions from cores 102 to shared cache 106, from shared cache 106 to any or all the cores, from one core to another core, and/or between these and/or other components of processor 300 not explicitly shown. For example, communication bus 302 may include a variety of transmission nodes (not explicitly shown in FIG. 3) arranged and interconnected in any suitable way. For example, transmission nodes may be connected in any suitable topology such as a point-to-point topology, a mesh topology, a ring topology, a star topology, a tree topology, a hybrid topology incorporating elements of two or more of these, or the like. In this way, each of the cores 102 may be connected to shared cache 106, as well as to one another (and, possibly, to other elements of processor 300 not explicitly shown).

Processor 300 may implement the illustrated elements in any suitable way so as to perform methods 200-A and 200-B, as well as other processes described herein. For instance, in some implementations, processor 300 may implement a multi-core central processing unit (CPU); each core 102 may implement one core of a plurality of cores included in the CPU; each local cache 104 may implement a level-1 (L1) cache used by one respective core; shared cache 106 may implement a level-2 (L2) cache of the CPU used by the plurality of cores; and the L2 cache (i.e., shared cache 106) may be inclusive of all the L1 caches local to all the cores. Additionally, in some implementations, processor 300 may include: a core (e.g., any of cores 102); a local cache of the core (e.g., the local cache 104 of the core), the local cache being configured to store a cache line and a way indicator; and a shared cache (e.g., shared cache 106) that includes a first way and a second way, the cache line being stored in an entry within the first way. In this example, as similarly described above in relation to method 200-A, the shared cache may be configured to: 1) provide, in response to a request from the core, the cache line to the local cache, 2) provide, with the cache line provided to the local cache, the way indicator to be stored in the local cache, the way indicator being configured to indicate that the entry for the cache line is not stored in the second way, and 3) based on the way indicator stored within the local cache, update the entry without accessing the second way.

While principles described herein focus on way filtering in a multi-way set-associative shared cache such as shared cache 106, it will be understood that other caches described herein, such as local caches 104, may also be arranged in a similar way (e.g., as multi-way set-associative caches). These caches may be smaller and/or less complex than the shared cache, however, due at least to the more limited role they play with respect to only one core. For example, a local cache 104 of a core 102 may implement a first multi-way set-associative cache that includes a first plurality of sets and a first plurality of ways and the shared cache 106 of processor 300 may implement a second multi-way set-associative cache that includes a second plurality of sets and a second plurality of ways. In this example, the second plurality of sets may be more numerous than the first plurality of sets and the second plurality of ways may be more numerous than the first plurality of ways. In other words, while the storage space of shared cache 106 may be arranged in a similar manner to each local cache 104 (i.e., in accordance with a multi-way set-associative arrangement that includes a plurality of both sets and ways), shared cache 106 may be considerably larger than any of local caches 104 so as to be inclusive of these caches (as has been described). As such, shared cache 106 may include more sets and more ways than any local cache 104 in certain implementations, such that there would be no direct mapping where a particular cache line is stored in one cache and where it would be stored in the other.

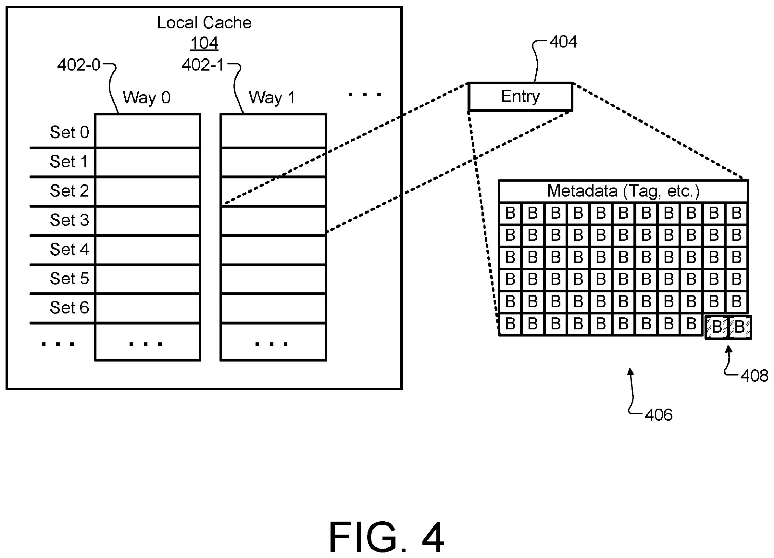

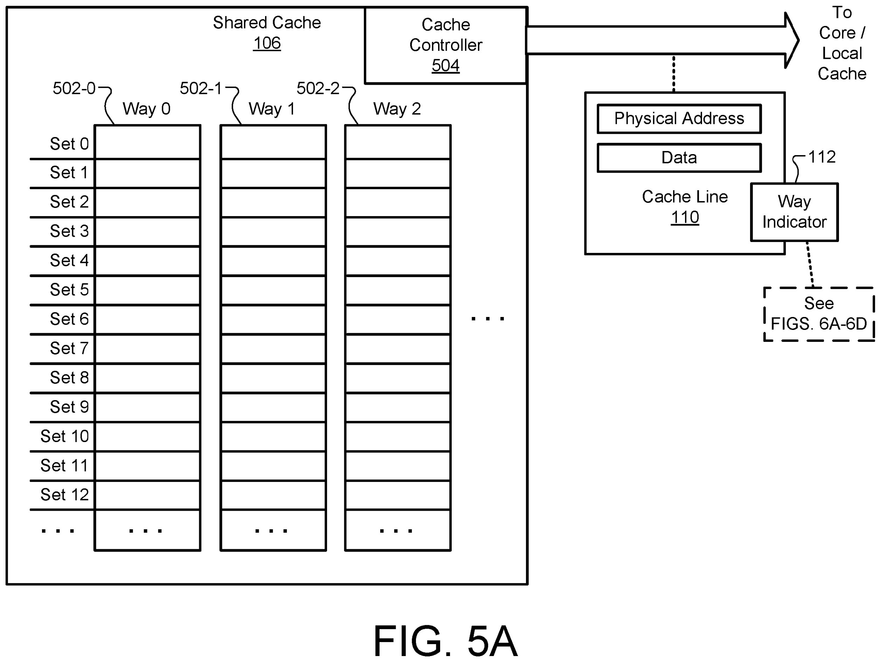

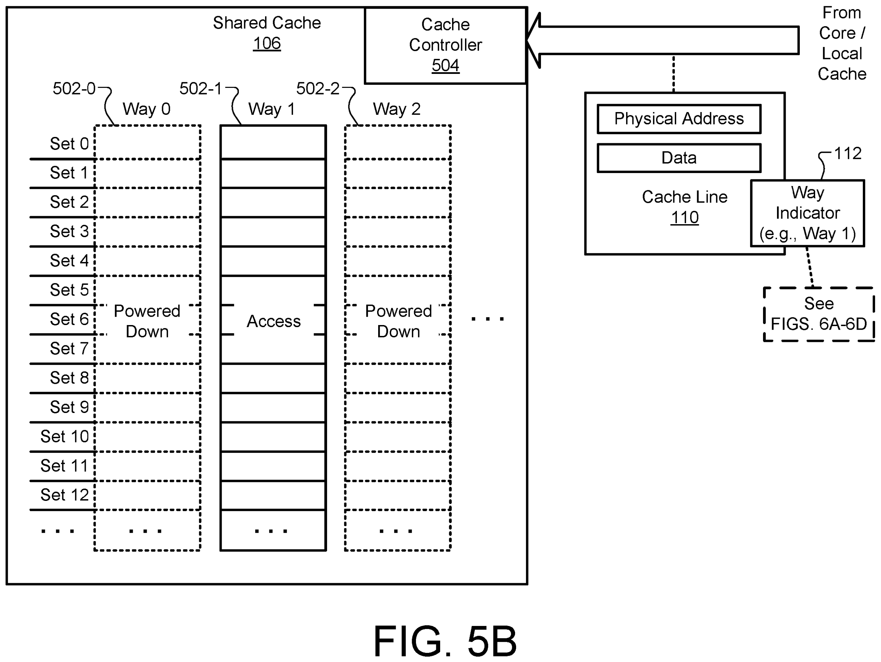

As indicated by dashed-line tags in FIG. 3, certain elements of an example local cache 104 are illustrated and described in more detail with respect to FIG. 4 ("See FIG. 4"), while certain elements of an example shared cache 106 are illustrated and described in more detail with respect to FIGS. 5A and 5B ("See FIGS. 5A-5B").

FIG. 4 shows illustrative aspects of an implementation of local cache 104 within a core 102 of processor 300. As has been described, this local cache 104 may be integrated within the core 102 for local use as the core executes instructions. As such, the core 102 is generally described as controlling local cache 104 and performing the operations associated with local cache 104 (e.g., receiving and sending messages relating to local cache 104, etc.). This is one difference between local cache 104 and shared cache 106, which, as described in more detail below, includes controller circuitry configured to perform the various operations (e.g., handling communications, making determinations, etc.) attributed to shared cache 106.

Local cache 104 is shown to include at least two ways, labeled as way 402-0 ("Way 0") and way 402-1 ("Way 1"). An ellipsis shows that there may be additional ways other than these two, though, as mentioned above, it will be understood that local cache 104 may include fewer ways than are included in shared cache 106 (described in more detail below). Each way 402-0 and 402-1 is drawn as a tall rectangle that includes a plurality of entries 404 corresponding to a plurality of different sets (e.g., "Set 0", "Set 1", "Set 2", etc.). While seven sets are explicitly shown in FIG. 4, it will be understood that the ellipsis may represent additional sets as may serve a particular implementation. Here again, however, local cache 104 will be understood to include fewer sets than shared cache 106 in certain implementations. Each way 402-0, 402-1, etc., may be implemented by a separate (e.g., discrete) storage resource or memory module. For example, each tall rectangle used to depict a different way in FIG. 4 may represent a separate static random-access memory (SRAM) that is included in the core hosting the local cache 104.

This distinction between ways (implemented as different SRAMs) may be relevant due to the way that a processor may be designed and developed, as well as how different ways are accessed (described in more detail below). Rather than designing each entry of each cache from scratch, a designer of a processor may commonly integrate predesigned SRAM modules with other logic and circuitry being developed. As such, it will be understood that the SRAMs of local cache 104 are not separate or discrete in the sense of being apart from other circuitry of the processor core (as they may indeed be tightly integrated with such circuitry), but, rather, in the sense of how they are designed and integrated into the overall design. One preconfigured SRAM may be imported into the design for one purpose (e.g., as part of a local cache of a particular core), another preconfigured SRAM (e.g., possibly having a different size and/or other different properties than the first SRAM) may be imported into the design for another purpose (e.g., as part of a shared cache for the processor), and so forth.

When a processor designer is selecting from preconfigured SRAMs to use in the design of a cache such as local cache 104, there may be limits as to how closely tailored the SRAM is to the designer's specifications. For example, if a designer wanted to store 94 bits per entry within an SRAM (to choose an arbitrary number for sake of example), the designer may choose from preconfigured SRAMs that store 90 bits per entry, 100 bits per entry, or 128 bits per entry. In this arbitrary example, the option that stores only 90 bits per entry would be too small for the design's stated parameters, so the options that include 100 bits per entry or 128 bits per entry could be selected instead. In either case, however, it is noted that there are a few "extra bits" per entry that the designer may not have explicitly required in the design. In some cases, these bits could be integrated into the design and left unused. However, it may also be advantageous for the designer to have a few additional unused bits available in case other uses for them become apparent during the design process.

One example of such a use case for extra bits may be storing one or more bits' worth of a way indicator received from the shared cache when it supplies a cache line. While the designer may not explicitly account for storing these bits when selecting an SRAM for the design of local cache 104, the way indicator storage could be a highly effective (and flexible) way to put one or more "extra" bits (which happen to be available in the design) to efficient use in improving the design performance. If sufficient additional bits are available, for example, the local cache 104 may be configured to store a full way indicator that allows for filtering all but the one way in which a cache line is stored. For instance, three bits would be needed for a full way indicator in the example where the shared cache 106 includes eight ways, while four bits would be needed for a full way indicator in the example where the shared cache 106 includes sixteen ways, and so forth. However, if there are insufficient additional bits available to store the full way indicator, techniques described herein show how one or two additional bits (or some other number smaller than would be needed for the full way indicator) may be put to effective use in storing a partial way indicator that allows for at least some of the ways to be filtered.

In FIG. 4, an illustrative entry 404 is arbitrarily selected from Set 3 and Way 1 in local cache 104 and broken out to illustrate how the storage space of this portion of the SRAM may be allocated. As shown, entry 404 may include a certain amount of storage space ("Metadata (Tag, etc.)") for storing metadata associated with a particular cache line. This metadata may include addressing information (e.g., a tag for the physical address, etc.) and/or other such metadata used for administration of caching operations. Entry 404 may then include some number of bytes 406 (each represented by a square labeled 'B') for holding the cache line data itself. For instance, in this example, the cache line may be 64 bytes (i.e., 512 bits) such that 64 bytes 406 of the entry are shown to be used for storing the cache line data. In this particular example, the SRAM implementing way 402-1 may include a few extra bits that are not needed for the metadata or the cache line data. Specifically, two bytes 408 are shown to be shaded differently and slightly separated from the other bytes 406. While these bytes 408 will be understood to be part of entry 404, they may not necessarily be allocated for other uses and may thus be considered additional or "extra" bits. Accordingly, the bits within these two bytes 408 may be used for various purposes that may arise during the design of the processor, including to store one or more way indicator bits, such as has been described.

It will be understood that the numbers of bytes and bits shown and described in relation to FIG. 4 are provided as examples only. For example, a larger or smaller cache line size (e.g., 32 bytes, 50 bytes, 128 bytes, etc.) could be used rather than 64 bytes. Additionally, for a given local cache design, there may be any number of additional or extra bits, including zero additional or extra bits (i.e., there may be more or less than the two full bytes' worth shown in this example). It will be understood that, while way indicators may be an efficient way to make use of additional or extra bits that happen to be available in a design, way indication bits could also be intentionally designed in from the beginning (e.g., as part of the Metadata, etc.) so that an SRAM may be designed or selected that properly accommodates the desired number of way indication bits intended for a particular design.

Additionally, while different ways are shown (in FIG. 4 and other figures herein) to be implemented by separate SRAMs in a one-to-one manner, it will be understood that, in certain implementations, multiple ways could be implemented in a same SRAM or multiple SRAMs could be used to implement a single way (e.g., one SRAM being used to store tags and/or other metadata, another corresponding SRAM being used to store the cache line data and the way indicator, etc.). The same distribution of SRAMs to ways may also apply in the shared cache implementations described in more detail below.

FIG. 5A shows illustrative aspects of an implementation of shared cache 106 of processor 300 when providing (e.g., supplying) a cache line 110 to a local cache (e.g., local cache 104 or core 102 as described above). Similar to local cache 104, shared cache 106 is shown to include a plurality of ways, labeled, in this case, as way 502-0 ("Way 0"), way 502-1 ("Way 1"), way 502-2 ("Way 2"), and so forth. As described in relation to FIG. 4, an ellipsis shows that there may be additional ways other than these three, such that, as mentioned above, the ways in shared cache 106 may be more numerous than the ways included in each local cache 104 (described in more detail above). As has been mentioned, shared cache 106 may be different from the local caches 104 in that it is not explicitly tied to one core that can serve as a controller for the cache. Accordingly, a cache controller 504 is shown to be included in (or otherwise associated with) shared cache 106 to perform control operations associated with shared cache 106 (e.g., handling communications to and from the cores, making determinations such as searching for an entry within the ways of a set, etc.).

Similar to ways 402-0 and 402-1 of the example local cache 104 above, each of ways 502-0, 502-1, and 502-2 is drawn as a tall rectangle that includes a plurality of entries corresponding to a plurality of different sets (e.g., "Set 0", "Set 1", "Set 2", etc.). While the entries of shared cache 106 are not explicitly labeled and broken out for more detailed illustration as entry 404 was above, it will be understood that each entry may be similar (though not identical) to entry 404 described above. For example, the entries of ways 502-0 through 502-2 may each be configured to store metadata (e.g., address tags, etc.), cache line data, and so forth. While thirteen sets are explicitly shown in FIG. 5A, it will be understood that the ellipsis may represent additional sets as may serve a particular implementation. Here again, the sets included in shared cache 106 will be understood to be more numerous than the sets in each local cache 104 in certain implementations.

As with the ways of local cache 104, each way of shared cache 106 may be implemented by one or more separate SRAMs (or other storage structure), such that a few additional or extra bits could be available for various purposes beyond the scope of this disclosure. While these bits may be used to store a way identifier in local cache 104, however, it will be understood that there would be no reason to store the way identifier in shared cache 106 since it would merely reflect the way in which a particular entry is stored and would therefore not help in finding that entry. The implementation of different ways using different SRAMs, however, may be relevant for a different reason in shared cache 106. When a particular entry is being looked up based on a particular physical address associated with the cache line, the set in which the entry can be found can be directly derived from the physical address (as has been described). The way (or separate SRAM) storing that entry, however, is not derivable from the physical address, meaning that, without more information, each way would have to be checked (e.g., comparing tags of a physical address to metadata stored in the entries of that set, etc.) to determine where the entry is located.

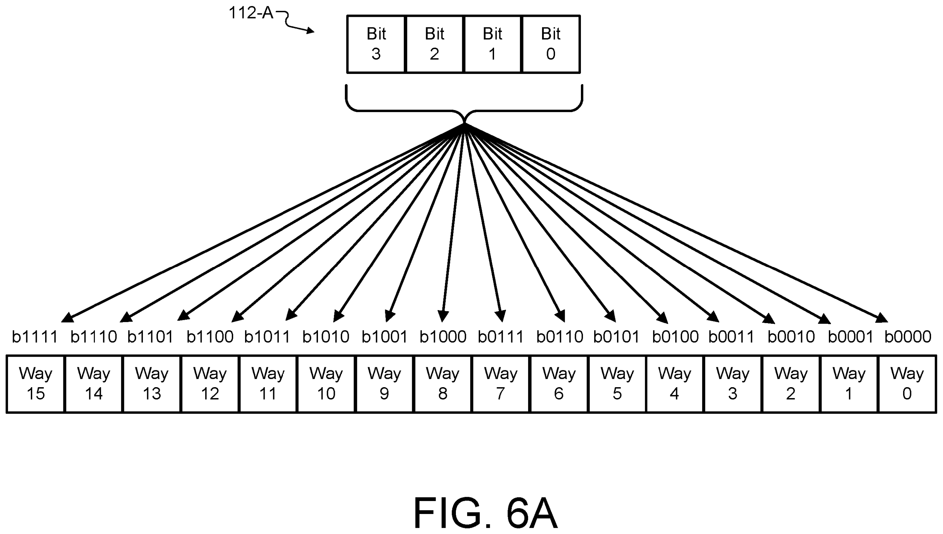

FIG. 5A shows that, when providing a cache line 110 to a core (for caching in the local cache 104), a way indicator 112 may be included with the cache line 110. As indicated by the dashed line tag associated with way indicator 112 ("See FIGS. 6A-6D"), additional examples and details about the way indicator will be provided below in relation to FIGS. 6A through 6D. The way indicator 112 may be determined at the time of shared cache 106 supplying the cache line 110 because shared cache 106 had to lookup or store the cache line in an entry before supplying it. Way indicator 112 can then be stored by the local cache 104 and returned to shared cache 106 with the cache line 110 at a later time to assist shared cache 106 (e.g., cache controller 504) with locating the entry corresponding to the cache line 110 within the set indicated by the physical address. More specifically, as has been described, way indicator 112 may be used to allow shared cache 106 (and cache controller 504 more specifically) to perform way filtering in accordance with principles described herein.

FIG. 5B shows the same illustrative aspects of the implementation of shared cache 106 as FIG. 5A, except that while FIG. 5A showed shared cache 106 supplying cache line 110 with the way indicator 112 to the local cache, FIG. 5B shows a scenario, later in time, when cache controller 504 is to be updating cache line 110 from the local cache. As shown, way indicator 112 may indicate, for example, that the relevant entry happened to be stored in way 502-1, or it may at least preclude the relevant entry being stored in either of ways 502-0 or 502-2. Based on this way indicator 112, as shown, cache controller 504 may access the SRAM of way 502-1 ("Access" of Way 1, which is indicated by solid lines to be fully powered up and operational as the SRAM is being accessed) while filtering the SRAMs of ways 502-0 and 502-2 (Ways 0 and 2 are each "Powered Down" and indicated by dotted lines to be filtered and excluded from the search for the entry so as to conserve power since way indicator 112 precludes these ways).

In other words, FIGS. 5A-5B illustrate that shared cache 106 may be a multi-way set-associative cache that includes a plurality of sets (e.g., Sets 0-12, etc.) and a plurality of ways (e.g., ways 502-0 to 502-2, etc.); each way of the plurality of ways may be implemented by a separate SRAM that is configured to store separate entries with respective cache lines for each set of the plurality of sets (e.g., by including sufficient capacity for storing, within the SRAM, one cache line entry per set for all the plurality of sets); a physical address associated with the cache line 110 indicates which set of the plurality of sets is to be used to store the entry while not indicating which way of the plurality of ways is to be used to store the entry; and the updating of the entry may be performed without accessing at least one of the ways (e.g., way 502-0 and way 502-2 in this example) by leaving the SRAM implementing that at least one way (i.e., the SRAMs implementing ways 502-0 and 502-2 in this example) powered down as the entry is updated (e.g., within way 502-1 in this example) by accessing the SRAM implementing the way storing the entry for the cache line (i.e., the SRAM implementing way 502-1 in this example).

As has been described, the updating of the cache line 110 within shared cache 106 may be initiated by shared cache 106 or by a core that is communicating the cache line 110 for a variety of reasons and/or under a variety of circumstances. This update may also be referred to as a writeback of the cache line to the shared cache. Depending on the circumstances of the update or writeback of the cache line, different actions may be taken with respect to the entry for the cache line in shared cache 106 (e.g., overwriting the entry, modifying metadata or status bits while not modifying the cache line data, evicting the entry to make room for other cache lines, moving the cache line to a different entry, etc.). It will be understood that similar actions could also be taken with respect to an entry for the cache line in a local cache. Regardless of the action that is to be taken, however, shared cache 106 (and cache controller 504 more particularly) must first locate (e.g., search for, find, discover, identify, etc.) the entry for the cache line within the set indicated by the physical address. As has been described, this may be performed efficiently by filtering certain ways (i.e., leaving the SRAMs of filtered ways powered down) while accessing only those ways that are not filtered (e.g., Way 1 in this example).

As one example of the circumstances under which an update to the entry for cache line 110 may be made in FIG. 5B, the updating of the entry may be initiated in response to an eviction operation performed by the local cache 104 of the core 102. As has been described, this may occur when the local cache 104 runs out of room within a certain set (i.e., all the ways are full) and a new cache line is to be stored. When this occurs, an older cache line has to be evicted. As such, a record of that eviction is recorded by the shared cache 106 (e.g., in the status data of its copy of the cache line) and any changes that have been made to the cache line by the core 102 may be captured (e.g., by overwriting the copy of the cache line in shared cache 106).

As another example of the circumstances under which an update to the entry for cache line 110 may be made in FIG. 5B, the updating of the entry may be initiated in response to a snoop operation performed by shared cache 106 and the local cache 104 of a first core. For example, as has been described, a different core may request access to the cache line 110 that has previously been cached and used by the first core. As such, shared cache 106 may perform the snoop to determine if the copy of the cache line maintained by shared cache 106 has the latest version of the data before providing the data to the other core. Additionally, other inter-core coordination may be performed by such operations, such as if the other core requests write access to the cache line, shared cache 106 may indicate to the first core that it is no longer allowed to write to the cache line (if it previously had write access).

As yet another example of the circumstances under which an update to the entry for cache line 110 may be made in FIG. 5B, the updating of the entry may be performed when the cache line 110 stored within the local cache 104 matches the cache line stored in the entry of the shared cache 106. In other words, the update does not necessarily have to mean that the cache line stored in the entry of shared cache 106 will be changed, only that it will be accessed for some reason (e.g., to read or write a status bit, etc.). Conversely, however, the updating of the entry could also be performed after the cache line 110 stored within the local cache 104 has been modified from the cache line 110 stored in the entry of the shared cache 106. In this example, the updating could include overwriting the cache line data to give shared cache 106 the latest version of the data as it was modified (within the local cache 104) by the core 102.

FIGS. 6A-6D show illustrative way indicators (i.e., possible implementations of way indicator 112) that may be coupled with a cache line (e.g., cache line 110) and used to perform way filtering in a shared cache in accordance with principles described herein. As has been described, one advantage of methods and systems described herein for way filtering in a shared cache of a processor is that the way filtering may be performed with flexibility as to how the way indicators are implemented. For example, as has been described, a way indicator may be implemented using extra bits that may otherwise be unused within local caches. If only one such bit is available, certain way filtering advantages may be gained thereby, while if more than one bit is available, even more benefits may be obtained. FIGS. 6A-6D shows several examples of how a way indicator may be implemented, using different numbers of bits, for a shared cache that includes 16 ways (labeled from Way 15 down to Way 0). It will be understood that the same principles described in relation to FIGS. 6A-6D may similarly apply to way indicators for shared caches with different numbers of ways (e.g., 4 ways, 8 ways, 25 ways, 32 ways, etc.).

A first example in FIG. 6A shows a way indicator 112-A that includes four bits labeled as Bit 3, Bit 2, Bit 1, and Bit 0. This particular example represents what has been referred to herein as a full way indicator, which is not only configured to preclude the entry for the cache line being stored in one or some of the ways that are to be filtered, but that is further configured to preclude the entry for the cache line being stored in any of the plurality of ways of the shared cache other than the way in which it is actually stored. In other words, a full way indicator such as way indicator 112-A fully specifies the way that stores the entry for the cache line, allowing all the other ways to be filtered. This type of way indicator requires the most resources (i.e., the largest number of bits) of all the types of way indicators, but also provides the most significant benefits (e.g., the most power savings, since only one way needs to be accessed in this case and all the others can remain powered down). As shown, the sixteen combinations of the four bits of full way indicator 112-A may map directly to the sixteen different ways such as by indicating, in binary, the index of the respective way being represented. For example, Way 0 is represented by all the bits being '0' (i.e., b0000), Way 15 is represented by all the bits being '1' (i.e., b1111), and other values are represented with other combinations (e.g., Way 10 being represented by bits b1010, Way 6 being represented by b0110, etc.).

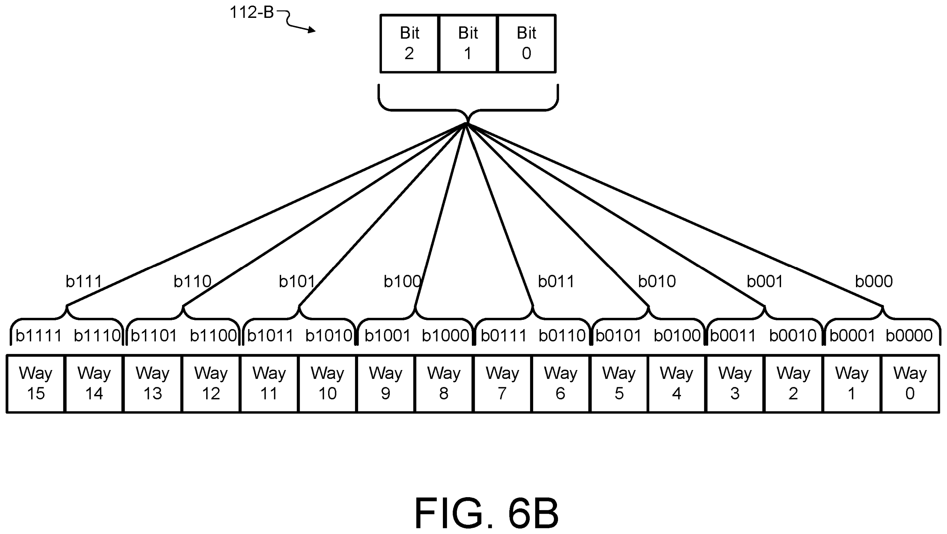

A second example in FIG. 6B shows a way indicator 112-B that includes three bits labeled as Bit 2, Bit 1, and Bit 0. This particular example represents what has been referred to herein as a partial way indicator, which precludes the entry for the cache line being stored in at least one way (which can be filtered) while allowing for the cache line to be stored in at least two other ways (which must both be checked). In other words, unlike full way indicator 112-A, partial way indicator 112-B allows for some way filtering (and corresponding benefits) without fully specifying exactly which way is storing the entry in question. The flexibility to make this tradeoff between using fewer bits (e.g., three instead of four in this example) while reaping fewer benefits (being able to filter out only 14 of the 16 ways, rather than 15 in this example) may be advantageous as a designer determines which resources are most valuable (e.g., storage bits, power savings, etc.) for a particular design. As shown, the eight combinations of the three bits of partial way indicator 112-B may map to the three most significant bits, in binary, of the index of the respective way being represented. For example, Ways 0 and 1 (which both have b000 as their three most significant bits) are represented by all the bits being '0' (i.e., b000), Ways 14 and 15 (which both have b111 as their three most significant bits) are represented by all the bits being '1' (i.e., b111), and other values are represented with other combinations (e.g., Ways 10 and 11 being represented by bits b101, Ways 6 and 7 being represented by b011, etc.).

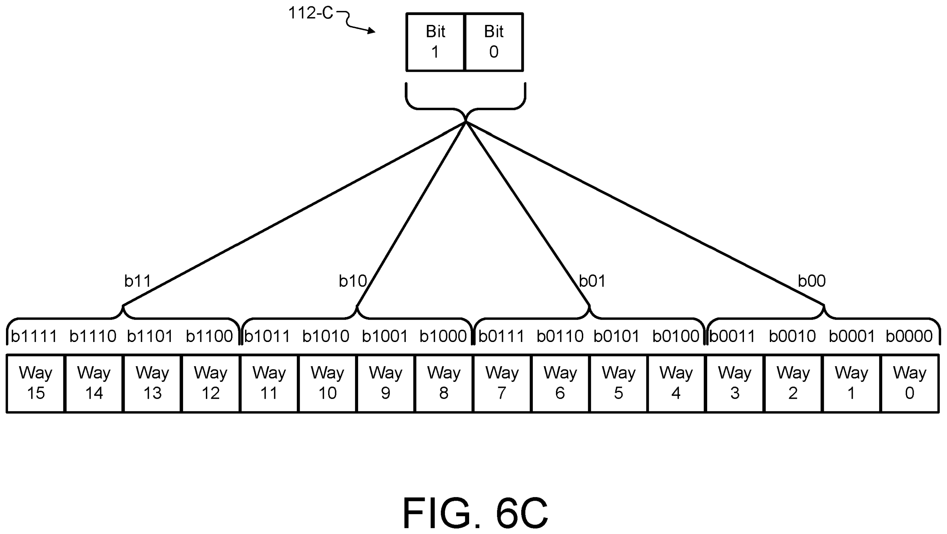

A third example in FIG. 6C shows a way indicator 112-C that includes two bits labeled as Bit 1 and Bit 0. This represents another partial way indicator that makes the tradeoff in a way that requires even fewer bits (e.g., two instead of three or four in this example) while also reaping even fewer benefits (being able to filter out only 12 of the 16 ways, rather than 14 or 15 in this example). As shown, the four combinations of the two bits of partial way indicator 112-C may map to the two most significant bits, in binary, of the index of the respective way being represented. For example, Ways 0-3 (which each have 00 as their two most significant bits) are represented by both bits being '0' (i.e., b00), Ways 4-7 (which each have 01 as their two most significant bits) are represented by b01, Ways 8-11 (which each have 10 as their two most significant bits) are represented by b10, and Ways 12-15 (which each have 11 as their two most significant bits) are represented by both bits being '1' (i.e., b11).

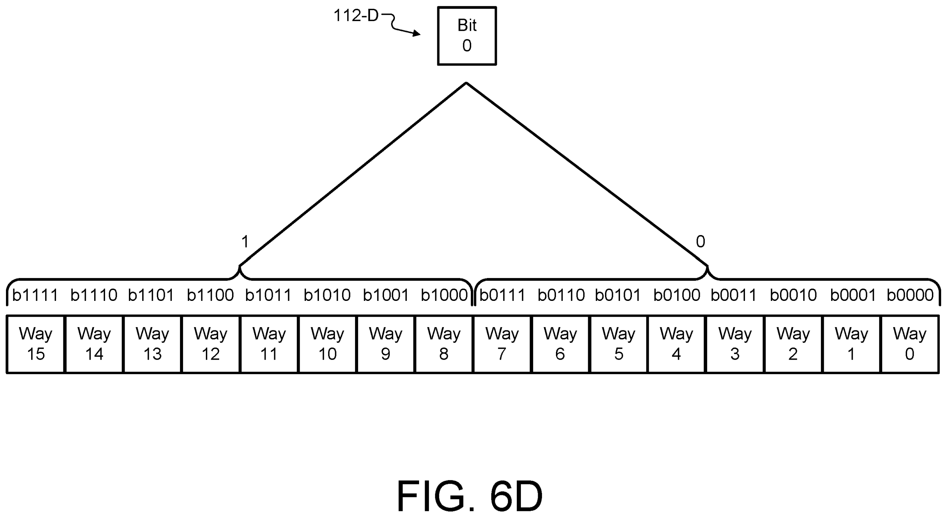

A fourth example in FIG. 6D shows a way indicator 112-D that includes only a single bit, labeled as Bit 0. This represents the most basic type of partial way indicator that makes the tradeoff between bits and power savings in a manner that minimizes the bits (e.g., requiring only one bit, rather than up to four in the other examples) while still reaping significant power saving benefits (e.g., still being able to filter out 8 of the 16 ways to thereby still cut the power in half as compared to not doing any way filtering). As shown, the two values of the one-bit way indicator 112-D may map to the most significant bit, in binary, of the index of the respective way being represented. For example, Ways 0-7 (which each have '0' as their most significant bit) are represented by way indicator 112-D being '0', while Ways 8-15 (which each have '1' as their most significant bit) are represented by way indicator 112-D being '1'.

As has been mentioned, various methods and processes described herein may be implemented at least in part as instructions embodied in a non-transitory computer-readable medium and executable by one or more computing devices. In general, a processor (e.g., a microprocessor) receives instructions, from a non-transitory computer-readable medium (e.g., a memory, etc.), and executes those instructions, thereby performing one or more operations such as the operations described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random-access memory (DRAM), which typically constitutes a main memory.

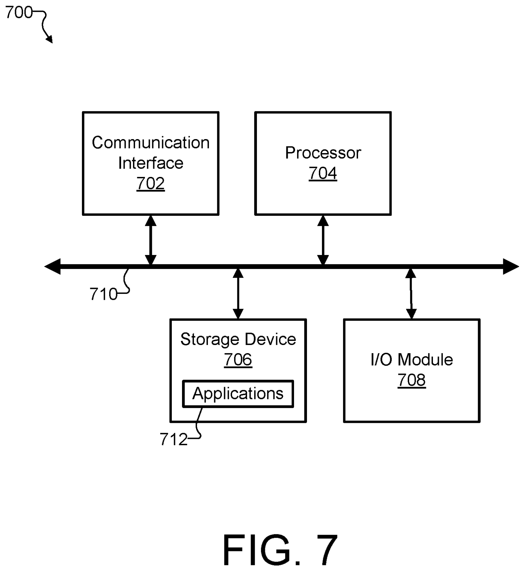

FIG. 7 shows an illustrative computing device 700 that may use or implement one or more processors (e.g., CPUs, etc.) such as those described herein. As shown in FIG. 7, computing device 700 may include a communication interface 702, a processor 704 (which may represent an implementation of processor 300 with various components such as processor cores with respective local caches, a shared cache, a communication bus, a memory controller, etc.), a storage device 706, and an input/output (I/O) module 708 communicatively connected via a communication infrastructure 710. While an illustrative computing device 700 is shown in FIG. 7, the components illustrated in FIG. 7 are not intended to be limiting. Additional or alternative components may be used in other embodiments. Components of computing device 700 shown in FIG. 7 will now be described in additional detail.

Communication interface 702 may be configured to communicate with one or more computing devices. Examples of communication interface 702 include, without limitation, a wired network interface (such as a network interface card), a wireless network interface (such as a wireless network interface card), a modem, an audio/video connection, and any other suitable interface.

Processor 704 generally represents any type or form of processing unit capable of processing data or interpreting, executing, and/or directing execution of one or more of the instructions, processes, and/or operations described herein. Processor 704 may direct execution of operations in accordance with one or more applications 712 or other computer-executable instructions such as may be stored in storage device 706 or another computer-readable medium.

Storage device 706 may include one or more data storage media, devices, or configurations and may employ any type, form, and combination of data storage media and/or device. For example, storage device 706 may include, but is not limited to, a hard drive, network drive, flash drive, magnetic disc, optical disc, RAM, dynamic RAM, other non-volatile and/or volatile data storage units, or a combination or sub-combination thereof. Electronic data, including data described herein, may be temporarily and/or permanently stored in storage device 706. For example, data representative of one or more executable applications 712 configured to direct processor 704 to perform any of the operations described herein may be stored within storage device 706. In some examples, data may be arranged in one or more databases residing within storage device 706.

I/O module 708 may include one or more I/O modules configured to receive user input and provide user output. One or more I/O modules may be used to receive input for a single virtual experience. I/O module 708 may include any hardware, firmware, software, or combination thereof supportive of input and output capabilities. For example, I/O module 708 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 708 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 708 is configured to provide graphical data to a display for presentation to a user. The graphical data may be representative of one or more graphical user interfaces and/or any other graphical content as may serve a particular implementation.

The following clauses describe implementations of way filtering in a shared cache of a processor in accordance with principles described herein.

Clause 1. A method comprising: providing, by a shared cache of a processor in response to a request from a core of the processor, a cache line to a local cache of the core, wherein the shared cache includes a first way and a second way, and the cache line is stored in an entry within the first way; providing, with the cache line provided to the local cache, a way indicator configured to preclude the entry for the cache line being stored in the second way; storing, within the local cache, the cache line and the way indicator; and based on the way indicator stored within the local cache, updating the entry without accessing the second way.

Clause 2. The method of clause 1, wherein: the shared cache is a multi-way set-associative cache that includes a plurality of sets and a plurality of ways; each way of the plurality of ways is implemented by a separate static random-access memory (SRAM) that is configured to store separate entries with respective cache lines for each set of the plurality of sets; a physical address associated with the cache line indicates which set of the plurality of sets is to be used to store the entry while not indicating which way of the plurality of ways is to be used to store the entry; and the updating of the entry without accessing the second way includes leaving a second SRAM implementing the second way powered down while updating the entry by accessing a first SRAM implementing the first way.

Clause 3. The method of any of clauses 1 to 2, wherein: the shared cache includes a plurality of ways including the first way and the second way; and the way indicator is further configured to preclude the entry for the cache line being stored in any of the plurality of ways other than the first way.

Clause 4. The method of any of clauses 1 to 2, wherein: the shared cache includes a plurality of ways including the first way, the second way, and a third way; and the way indicator is configured to preclude the entry for the cache line being stored in the second way while allowing for the cache line to be stored in the first way or the third way.

Clause 5. The method of any of clauses 1 to 4, further comprising: detecting, by the core, a cache miss for the cache line in the local cache of the core; and transmitting, by the core in response to the detecting of the cache miss, a message to the shared cache, the message including the request for the shared cache to provide the cache line.

Clause 6. The method of clause 5, further comprising: receiving, by the shared cache, the message transmitted by the core; and detecting a cache hit for the cache line in the shared cache; wherein the providing of the cache line to the local cache includes transmitting the cache line from the shared cache based on the cache hit.

Clause 7. The method of clause 5, further comprising: receiving, by the shared cache, the message transmitted by the core; detecting an additional cache miss for the cache line in the shared cache; and retrieving, based on the additional cache miss, the cache line from a data source external to the processor; wherein the providing of the cache line to the local cache includes transmitting the cache line from the shared cache subsequent to retrieving the cache line from the data source external to the processor.

Clause 8. The method of any of clauses 1 to 7, wherein the updating of the entry is initiated in response to an eviction operation performed by the local cache of the core.

Clause 9. The method of any of clauses 1 to 7, wherein the updating of the entry is initiated in response to a snoop operation performed by the shared cache and the local cache of the core.

Clause 10. The method of any of clauses 1 to 9, wherein the updating of the entry is performed when the cache line stored within the local cache matches the cache line stored in the entry of the shared cache.

Clause 11. The method of any of clauses 1 to 9, wherein the updating of the entry is performed after the cache line stored within the local cache has been modified from the cache line stored in the entry of the shared cache.

Clause 12. The method of any of clauses 1 to 11, wherein: the local cache of the core is a first multi-way set-associative cache that includes a first plurality of sets and a first plurality of ways; the shared cache of the processor is a second multi-way set-associative cache that includes a second plurality of sets and a second plurality of ways; and the second plurality of sets is more numerous than the first plurality of sets, and the second plurality of ways is more numerous than the first plurality of ways.

Clause 13. The method of any of clauses 1 to 12, wherein: the processor implements a multi-core central processing unit (CPU); the core implements one core of a plurality of cores included in the CPU; the local cache implements a level-1 (L1) cache used by the core; the shared cache implements a level-2 (L2) cache of the CPU used by the plurality of cores; and the L2 cache is inclusive of the L1 cache and one or more additional L1 caches local to one or more additional cores of the plurality of cores.

Clause 14. A processor comprising: a core; a local cache of the core, the local cache configured to store a cache line and a way indicator; and a shared cache including a first way and a second way, the cache line being stored in an entry within the first way, and the shared cache being configured to: provide, in response to a request from the core, the cache line to the local cache, provide, with the cache line provided to the local cache, the way indicator to be stored in the local cache, the way indicator being configured to indicate that the entry for the cache line is not stored in the second way, and based on the way indicator stored within the local cache, update the entry without accessing the second way.

Clause 15. The processor of clause 14, wherein: the shared cache is a multi-way set-associative cache that includes a plurality of sets and a plurality of ways; each way of the plurality of ways is implemented by a separate static random-access memory (SRAM) that is configured to store separate entries with respective cache lines for each set of the plurality of sets; a physical address associated with the cache line indicates which set of the plurality of sets is to be used to store the entry while not indicating which way of the plurality of ways is to be used to store the entry; and the updating of the entry without accessing the second way includes leaving a second SRAM implementing the second way powered down while updating the entry by accessing a first SRAM implementing the first way.

Clause 16. The processor of any of clauses 14 to 15, wherein: the shared cache includes a plurality of ways including the first way and the second way; and the way indicator is further configured to preclude the entry for the cache line being stored in any of the plurality of ways other than the first way.

Clause 17. The processor of any of clauses 14 to 15, wherein: the shared cache includes a plurality of ways including the first way, the second way, and a third way; and the way indicator is configured to preclude the entry for the cache line being stored in the second way while allowing for the cache line to be stored in the first way or the third way.

Clause 18. A shared cache of a processor, the shared cache including: a first way including an entry storing a cache line; a second way; and a cache controller configured to: provide, in response to a request from a core of the processor, the cache line to a local cache of the core, the local cache being configured to store the cache line and a way indicator, provide, with the cache line provided to the local cache, the way indicator to be stored in the local cache, the way indicator being configured to indicate that the entry for the cache line is not stored in the second way, and based on the way indicator stored within the local cache, update the entry without accessing the second way.

Clause 19. The shared cache of clause 18, wherein: the shared cache includes a plurality of ways including the first way and the second way; and the way indicator is further configured to preclude the entry for the cache line being stored in any of the plurality of ways other than the first way.

Clause 20. The shared cache of clause 18, wherein: the shared cache includes a plurality of ways including the first way, the second way, and a third way; and the way indicator is configured to preclude the entry for the cache line being stored in the second way while allowing for the cache line to be stored in the first way or the third way.

Various implementations of the systems and techniques described herein can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A number of implementations have been described. Nevertheless, it will be understood that various modifications may be made without departing from the spirit and scope of the description and claims. In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

Specific structural and functional details disclosed herein are merely representative for purposes of describing example implementations. Example implementations, however, may be embodied in many alternate forms and should not be construed as limited to only the implementations set forth herein.

It will be understood that, although the terms first, second, etc. may be used herein to describe various elements, these elements should not be limited by these terms. These terms are only used to distinguish one element from another. A first element could be termed a second element, and, similarly, a second element could be termed a first element, without departing from the scope of the implementations of the disclosure. As used herein, the term and/or includes any and all combinations of one or more of the associated listed items.

The terminology used herein is for the purpose of describing particular implementations only and is not intended to be limiting of the implementations. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of the stated features, steps, operations, elements, and/or components, but do not preclude the presence or addition of one or more other features, steps, operations, elements, components, and/or groups thereof.

It will be understood that when an element is referred to as being "coupled," "connected," or "responsive" to, or "on," another element, it can be directly coupled, connected, or responsive to, or on, the other element, or intervening elements may also be present. In contrast, when an element is referred to as being "directly coupled," "directly connected," or "directly responsive" to, or "directly on," another element, there are no intervening elements present. As used herein the term "and/or" includes any and all combinations of one or more of the associated listed items.

Spatially relative terms, such as "beneath," "below," "lower," "above" "upper," and the like, may be used herein for ease of description to describe one element or feature in relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 130 degrees or at other orientations) and the spatially relative descriptors used herein may be interpreted accordingly.

Unless otherwise defined, the terms (including technical and scientific terms) used herein have the same meaning as commonly understood by one of ordinary skill in the art to which these concepts belong. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized, or location information may be obtained (such as to a city, zip code, or state level), so that a particular location of a user cannot be determined. Thus, the user may have control over what information is collected about the user, how that information is used, and what information is provided to the user.

While certain features of the described implementations have been illustrated as described herein, many modifications, substitutions, changes, and equivalents may occur to those skilled in the art. It is therefore to be understood that the appended claims are intended to cover such modifications and changes as fall within the scope of the implementations. It will be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components, and/or features of the different implementations described. As such, the scope of the present disclosure is not limited to the particular combinations hereafter claimed, but instead extends to encompass any combination of features or example implementations described herein irrespective of whether or not that particular combination has been specifically enumerated in the accompanying claims at this time.

## Claims

1. A method comprising:
providing, by a shared cache of a processor in response to a request from a core of the processor, a cache line to a local cache of the core, wherein the shared cache includes a first way and a second way, and the cache line is stored in an entry within the first way;
providing, with the cache line provided to the local cache, a way indicator configured to preclude the entry for the cache line being stored in the second way;
storing, within the local cache, the cache line and the way indicator; and
based on the way indicator stored within the local cache, updating the entry without accessing the second way.

2. The method of claim 1, wherein:
the shared cache is a multi-way set-associative cache that includes a plurality of sets and a plurality of ways;
each way of the plurality of ways is implemented by a separate static random-access memory (SRAM) that is configured to store separate entries with respective cache lines for each set of the plurality of sets;
a physical address associated with the cache line indicates which set of the plurality of sets is to be used to store the entry while not indicating which way of the plurality of ways is to be used to store the entry; and
the updating of the entry without accessing the second way includes leaving a second SRAM implementing the second way powered down while updating the entry by accessing a first SRAM implementing the first way.

3. The method of claim 1, wherein one of:
the shared cache includes a plurality of ways including the first way and the second way and the way indicator is further configured to preclude the entry for the cache line being stored in any of the plurality of ways other than the first way; or
the shared cache includes a plurality of ways including the first way, the second way, and a third way and the way indicator is configured to preclude the entry for the cache line being stored in the second way while allowing for the cache line to be stored in the first way or the third way.

4. The method of claim 1, further comprising:
detecting, by the core, a cache miss for the cache line in the local cache of the core; and
transmitting, by the core in response to the detecting of the cache miss, a message to the shared cache, the message including the request for the shared cache to provide the cache line.

5. The method of claim 4, further comprising:
receiving, by the shared cache, the message transmitted by the core; and
detecting a cache hit for the cache line in the shared cache;
wherein the providing of the cache line to the local cache includes transmitting the cache line from the shared cache based on the cache hit.

6. The method of claim 4, further comprising:
receiving, by the shared cache, the message transmitted by the core;
detecting an additional cache miss for the cache line in the shared cache; and
retrieving, based on the additional cache miss, the cache line from a data source external to the processor;
wherein the providing of the cache line to the local cache includes transmitting the cache line from the shared cache subsequent to retrieving the cache line from the data source external to the processor.

7. The method of claim 1, wherein the updating of the entry is initiated in response to an eviction operation performed by the local cache of the core and/or in response to a snoop operation performed by the shared cache and the local cache of the core.

8. The method of claim 1, wherein the updating of the entry is performed when the cache line stored within the local cache matches the cache line stored in the entry of the shared cache and/or after the cache line stored within the local cache has been modified from the cache line stored in the entry of the shared cache.

9. The method of claim 1, wherein:
the local cache of the core is a first multi-way set-associative cache that includes a first plurality of sets and a first plurality of ways;
the shared cache of the processor is a second multi-way set-associative cache that includes a second plurality of sets and a second plurality of ways; and
the second plurality of sets is more numerous than the first plurality of sets, and the second plurality of ways is more numerous than the first plurality of ways.

10. The method of claim 1, wherein:
the processor implements a multi-core central processing unit (CPU);
the core implements one core of a plurality of cores included in the CPU;
the local cache implements a level-1 (L1) cache used by the core;
the shared cache implements a level-2 (L2) cache of the CPU used by the plurality of cores; and
the L2 cache is inclusive of the L1 cache and one or more additional L1 caches local to one or more additional cores of the plurality of cores.

11. A processor comprising:
a core;
a local cache of the core, the local cache configured to store a cache line and a way indicator; and
a shared cache including a first way and a second way, the cache line being stored in an entry within the first way, and the shared cache being configured to:
provide, in response to a request from the core, the cache line to the local cache,
provide, with the cache line provided to the local cache, the way indicator to be stored in the local cache, the way indicator being configured to indicate that the entry for the cache line is not stored in the second way, and
based on the way indicator stored within the local cache, update the entry without accessing the second way.

12. The processor of claim 11, wherein:
the shared cache is a multi-way set-associative cache that includes a plurality of sets and a plurality of ways;
each way of the plurality of ways is implemented by a separate static random-access memory (SRAM) that is configured to store separate entries with respective cache lines for each set of the plurality of sets;
a physical address associated with the cache line indicates which set of the plurality of sets is to be used to store the entry while not indicating which way of the plurality of ways is to be used to store the entry; and
the updating of the entry without accessing the second way includes leaving a second SRAM implementing the second way powered down while updating the entry by accessing a first SRAM implementing the first way.

13. The processor of claim 11, wherein one of:
the shared cache includes a plurality of ways including the first way and the second way and the way indicator is further configured to preclude the entry for the cache line being stored in any of the plurality of ways other than the first way; or
the shared cache includes a plurality of ways including the first way, the second way, and a third way and the way indicator is configured to preclude the entry for the cache line being stored in the second way while allowing for the cache line to be stored in the first way or the third way.

14. A shared cache of a processor, the shared cache including:
a first way including an entry storing a cache line;
a second way; and
a cache controller configured to:
provide, in response to a request from a core of the processor, the cache line to a local cache of the core, the local cache being configured to store the cache line and a way indicator,
provide, with the cache line provided to the local cache, the way indicator to be stored in the local cache, the way indicator being configured to indicate that the entry for the cache line is not stored in the second way, and
based on the way indicator stored within the local cache, update the entry without accessing the second way.

15. The shared cache of claim 14, wherein one of:
the shared cache includes a plurality of ways including the first way and the second way and the way indicator is further configured to preclude the entry for the cache line being stored in any of the plurality of ways other than the first way; or
the shared cache includes a plurality of ways including the first way, the second way, and a third way and the way indicator is configured to preclude the entry for the cache line being stored in the second way while allowing for the cache line to be stored in the first way or the third way.
